# EUROPEAN PATENT SPECIFICATION

(11) **EP 1 209 163 B1**
(45) Date of publication and mention of the grant of the patent: **25.01.2006**
(21) Application number: 01850074.4
(22) Date of filing: 20.04.2001
(51) Int. Cl.: C07F 9/6533, C08K 5/5399

(54) **Oligomeric phosphoric acid ester morpholide compound and flame retardant thermoplastic resin composition containing the same**
Oligomerische Phosphorsäureester-Morpholid Verbindung und sie enthaltende feuerhemmende thermoplastische Harzzusammensetzung
Composé oligomère de morpholide d'ester d'acide phosphorique et composition de résine thermoplastique ignifugeante le contenant

(30) Priority: 28.11.2000 KR 2000071314
(43) Date of publication of application: 29.05.2002
(73) Proprietor: Cheil Industries Inc., Kumi-shi, Kyongsang-Pukdo 730-030 (KR)
(72) Inventor: Lim, Jong Cheol, Cheil Ind. Inc. R & D Center, Wuiwang-shi, Kyoungki-do 437-711 (KR); Seo, Kyung Hoon, Sheil Ind. Inc. R & D Center, Wuiwang-shi, Kyoungki-do 437-711 (KR); Yang, Sam Joo, Cheil Ind. Inc. R & D Center, Euiwang-shi, Kyoungki-do 437-711 (KR)
(74) Representative: Henriksson, Dan Ragnar Mikael

(56) References cited:
- US-A- 4 062 909
- PATENT ABSTRACTS OF JAPAN vol. 2000, no. 09, 13 October 2000 (2000-10-13) & JP 2000 154277 A (SHIKOKU CHEM CORP), 6 June 2000 (2000-06-06)

## Description

### BACKGROUND OF THE INVENTION

### Field of the Invention

The invention relates to an oligomeric phosphoric acid ester morpholide compound and a flame retardant thermoplastic resin composition containing the same.

### Description of the Related Art

For a long time it has been a main target in conducting research and development of resins to find a technique to improve flame retardancy of thermoplastic resins. So far, a variety of compounds have been proposed as a flame retardant agent. Flame retardant agents, which are generally used in the thermoplastic resin field, include a flame retardant agent based on a halogenic compound, particularly, a bromic compound, and a phosphorus flame retardant agent based on phosphoric acid ester. Such flame retardant agents are used with a fluorinated polyolefin as a anti-drip agent or an antimony compound as a flame retardation assistant.

JP 2000 154277 A (Shikoku Chem corp.) discloses a flame-retardant resin composition containing at least one phosphoramide as the effective ingredient.

US-A-4 062 909 discloses flame retardant polymer compositions containing phosphoramidates produced by the reaction of a phosphorous halidate with an amine in an organic diluent containing an aqueous solution of an alkali metal or ammonium hydroxide.

However, as concerns about the environmental issue increase, there is a trend to restrain the use of the halogen based flame retardant agent. Therefore, the phosphorus flame retardant agent, which is free of any halogen compound, is preferred to the flame retardant agent. Such a phosphorus flame retardant agent includes monomeric aromatic phosphoric acid ester compounds such as triphenyl phosphate, tricresyl phosphate and the like. The flame retardant agents comprising the monomeric aromatic phosphoric acid ester compounds can provide excellent flame retardancy and desired mechanical properties. However, such a flame retardant agent tends to migrate to the surface of a molded article during a molding process, thereby causing a juicing phenomenon. Furthermore, there is a disadvantage in that heat resistance of the resultant resin composition is remarkably reduced.

Accordingly, in order to overcome the above-mentioned problems, Japanese Patent Laid-Open Publication Nos. Sho59-24736, Sho59-45351, and Sho59-202240 disclose the use of an oligomeric condensed phosphoric acid ester compound as a flame retardant agent for thermoplastic resins. The disclosed flame retardant agents have advantages in that they involve a reduced juicing phenomenon while relatively improving the heat resistance of the resultant resin when they are applied to thermoplastic resins. However, they exhibits a reduced flame retardancy, as compared to that obtained when the same amount of the flame retardant agent based on the monomeric phosphoric acid ester is used. Therefore, it is needed to add the flame retardant agent in an increased amount so as to achieve an equal level of flame retardancy.

### SUMMARY OF THE INVENTION

Therefore, the present invention has been made in order to solve the above-mentioned problems in the related art.

In accordance with one aspect, an object of the present invention is to provide an oligomeric phosphoric acid ester morpholide compound, which is capable of improving properties such as flame retardancy, mechanical properties, workability, impact strength, heat resistance and the like by adding a functional group containing a nitrogen atom and having a great electron affinity to the conventional oligomeric phosphoric acid ester compound.

In accordance with another aspect of the present invention, it is an object to provide a flame retardant thermoplastic resin composition containing the above oligomeric phosphoric acid ester morpholide compound.

Therefore, in accordance with one aspect, the present invention relates to an oligomeric phosphoric acid ester morpholide compound represented by the following general formula I: 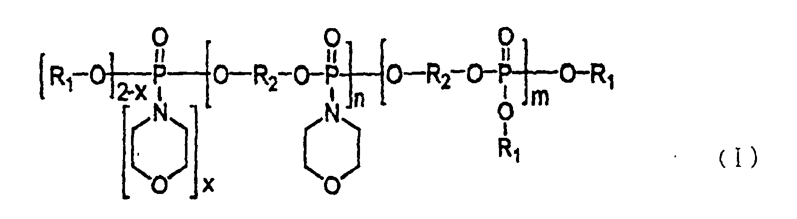
in which X is 1 or 2; R₁ is a C₆-C₂₀ aryl group, an alkyl substituted C₅-C₂₀ aryl group or a derivative thereof; R₂ is a C₆-C₃₀ aryl group, an alkyl substituted C₆-C₃₀ aryl group or a derivative thereof; and n+m is 1 to 5.

In accordance with another aspects, the present invention relates to a flame retardant thermoplastic resin composition comprising 10

0 parts by weight of a thermoplastic resin and 1 to 35 parts by weight of the oligomeric phosphoric acid ester morpholide compound according to the present invention.

### BRIEF DESCRIPTION OF THE DRAWINGS

Figs. 1a, 1b and 1c are graphs illustrating results of IR, NMR and LC analysis on the phosphoric acid ester morpholide compound I used in the examples of the present invention, respectively;
Figs. 2a, 2b and 2c are graphs showing results of IR, NMR and LC analysis on the phosphoric acid ester morpholide compound II used in the examples of the present invention, respectively;
Figs. 3a and 3b are graphs showing results of IR and NMR analysis on the phosphoric acid ester compound I used in the comparative examples of the present invention, respectively; and
Figs. 4a and 4b are graphs showing results of IR and NMR analysis on the phosphoric acid ester compound II used in the comparative examples of the present invention, respectively.

### DETAILED DESCRIPTION OF THE PREFERRED EMBODIMENT

Now, the present invention will be described in detail.

According to the present invention, a phosphoric acid ester morpholide compound is provided, which is represented by the following general formula I: 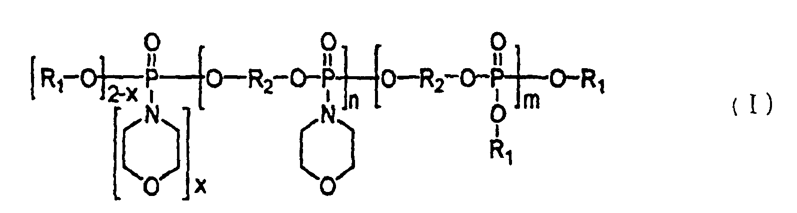
in which X is 1 or 2; R₁ is a C₆-C₂₀ aryl group, an alkyl substituted C₆-C₂₀ aryl group or a derivative thereof; R₂ is a C₆-C₃₀ aryl group, an alkyl substituted C₆-C₃₀ aryl group or a derivative thereof; and n+m is 1 to 5.

The R₁ is preferably a phenyl group or a phenyl group substituted with an alkyl group, for example, methyl, ethyl, propyl, isopropyl, butyl, sec-butyl, tert-butyl, isobutyl, isoamyl, tert-amyl or the like. More preferably, the R₁ is a phenyl group, or a phenyl group substituted with methyl, ethyl, isopropyl or tert-butyl group

The R₂ is residue preferably derived from diphenols such as resorcinol, hydroquinone or bisphenol-A.

The oligomeric phosphoric acid ester morpholide compound of the general formula I is prepared first by reacting an aromatic alcohol containing the R₁ group and morpholine with phosphorus oxychloride (POCl₃) at a temperature of 50 to 200 °C in the presence of an appropriate catalyst to obtain an aryl morpholino chlorophosphate. The aryl morpholino chlorophosphate is then reacted with a hydroxy aryl compound containing the R₂ group at a temperature of 70 °C to 220 °C in the presence of an appropriate catalyst. A polymerization method, which can be used in this procedure, includes a solution polymerization method or a melt polymerization method. The catalyst used to prepare the oligomeric phosphoric acid ester morpholide compound having the general formula I according to the present invention includes metal chlorides, for example, aluminum chloride (AlCl₃), magnesium chloride (MgCl₂), zinc chloride (ZnCl₂) or the like. Also, it is preferable to add a tertiary amine, for example, triethylamine to remove a by-product resulted from the reaction, that is, HC1.

The synthesized oligomeric phosphoric acid ester morpholide compounds prepared by the above method may contain compounds wherein n and m are all 0, in an amount of 0 to 10 % by weight depending on the reaction process used. The synthesized material can be used as it is or after being refined.

Now, the thermoplastic resin composition containing the oligomeric phosphoric acid ester morpholide compound according to the present invention is described in detail in terms of each component.

### (A) Thermoplastic resin composition

The thermoplastic resin which can be used to prepare the flame retardant thermoplastic resin composition of the present invention include, but are not limited to, polycarbonate base resins; polyphenylene ether base resins; polyolefin base resins such as polyethylene or polypropylene; polymers vinyl carboxylic acid or its derivatives such as polyalkyl acrylate, polyalkyl methacrylate, polyacrylamide, polyacrylonitrile or polyacrylic acid; vinyl aromatic based resin such as polystyrene; diene based resins such as polybutadiene or polyisoprene; polyamide based resins such as nylon 6 or nylon 66; and polyester based resins such as polyethylene terephthalate or polybutylene terephthalate. Also, their copolymers, as well as, their homopolymers can be used. Here, the copolymers may include random, block or grafted compolymers. In addition, a blend of two or more selected from the above-mentioned thermoplastic resins can be used.

The aromatic polycarbonate resin, which can be used according to the present invention, can be prepared by reacting
a diphenol expressed by the following general formula II with phosgene, halogen formate or carbonic acid diester. 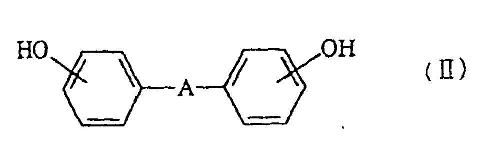
in which A is a single bond, C₁-C₅ alkylene, C₁-C₅ alkylidene, C₅-C₆ cycloalkylidene, -S-, or -SO₂-.

Particular examples of the dephenol of the general formula II include hydroquinone, resorcinol, 4,4'-dihydroxydiphenyl, 2,2-bis-(4-hydroxypheny)-propane, 2,4-bis-(4-hydroxyphenyl)-2-methylbutan, 1,1-bis-(4-hydroxypheny)-cyclohexane, 2,2-bis-(3-chloro-4-hydroxyphenyl)-propane, 2,2-bis-(3,5-dichloro-4-hydroxyphenyl)-propane, and the like.

As the polycarbonate, the one that has a branched chain can be used. Preferably, it can be prepared by adding a tri- or more functional compound, for example, a compound having 3 or more phenol group in an amount of 0.05 to 2 mole% based on the total weight of diphenol used in the polymerization. Also, it is possible to use an aromatic polyester-carbonate resin obtained from the polymerization reaction in the presence of an ester precursor, for example, a bifunctional carboxylic acid.

According to the present invention, the polycarbonate resin has preferably a weight average molecular weight of 10,000 to 200,000, and more preferably a weight average molecular weight of 15,000 to 80,000.

The vinyl aromatic polymer which can be used according to the present invention includes vinyl aromatic copolymers resulted from the copolymerization of 50 to 95 % by weight of styrene, α-methylstyrene, halogen, alkyl substituted styrene or a mixture thereof, and 5 to 50 % by weight of acrylonitrile, methacrylonitril, C₁-C₈ methacrylic acid alkyl ester, C₁-C₈ acrylic acid alkyl ester, maleic anhydride, C₁-C₄ alkyl, phenyl nuclei substituted maleimide or a mixture thereof. Also, a blend of two or more copolymers can be used.

The C₁-C₈ methacrylic acid alkyl ester or C₁-C₈ acrylic acid alkyl ester belongs to a class of methacrylic acid esters or acrylic acid esters, respectively. Both of them are esters derived from monohydril alcohol having 1 to 8 carbon atoms. Examples of the C₁-C₈ methacrylic acid alkyl ester or C₁-C₉ acrylic acid alkyl ester may include methacrylic acid methyl ester, methacrylic acid ethyl ester, acrylic acid ethyl ester, and methacrylic acid propyl ester. The methacrylic acid methyl ester may be particularly preferred.

The preferable vinyl aromatic copolymer includes copolymers of styrene, acrylonitrile and methacrylic acid methyl ester monomer which may be selectively included, copolymers of α-methylstyrene, acrylonitrile and methacrylic acid methyl ester monomer which may be selectively included, copolymers of styrene, α-methylstyrene, acrylonitrile and methacrylic acid methyl ester monomer which may be selectively included, and the like. This copolymer is usually prepared by the conventional emulsion polymerization method, suspension polymerization method or bulk polymerization method. According to the present invention, it is preferred to use the copolymer having a weight average molecular weight of 15,000 to 200,000.

As another preferred vinyl aromatic copolymer, a copolymer of styrene and maleic anhydride may be used. Preferably, the content of maleic anhydride is in a range of 5 to 25 % by weight, although the compositional ratio of the two components can be varied in a broad range. This copolymer also can be prepared by the conventional continuous bulk polymerization method or solution polymerization method. According to the present invention, it is preferred to use such vinyl aromatic copolymer having a weight average molecular weight of 20,000 to 200,000 and an intrinsic viscosity of 0.3 to 0.9.

Further, as the vinyl aromatic copolymer which can be used according to the present invention, rubber modified graft copolymers may be used. The vinyl aromatic rubber modified graft copolymer can be prepared by graft polymerizing 5 to 95 part by weight of a monomer mixture composed of 50 to 95 % by weight of styrene, α-methylstyrene, halogen, alkyl substituted styrene or a mixture thereof and 5 to 50 % by weight of acrylonitrile, methacrylonitrile, a C₁-C₈ methacrylic acid alkyl ester, a C₁-C₈ acrylic acid alkyl ester, maleic anhydride, a C₁₋C₄ alkyl, phenyl nuclei-substituted maleimide or a mixture thereof onto 5 to 95 part by weight of a rubber polymer, for example, butadiene rubber, acryl rubber, ethylene/propylene rubber, styrene/butadiene rubber, acrylonitrile/butadiene ruber, isoprene rubber, ethylene-propylene-diene rubber (EPDM), a polyorganosiloxan/polyalkyl (meth)acrylate rubber composite or a mixture thereof.

The C₁-C₈ methacrylic acid alkyl ester or C₁-C₈ acrylic acid alkyl ester belongs to a class of methacrylic acid esters or acrylic acid esters, respectively. Both of them are esters derived from monohydril alcohol having 1 to 8 carbon atoms. Examples of the C₁-C₈ methacrylic acid alkyl ester or C₁-C₈ acrylic acid alkyl ester may include methacrylic methyl ester, methacrylic ethyl ester, acrylic ethyl ester, and methacrylic propyl ester. The methacrylic acid methyl ester may e particularly preferred.

The preferred vinyl aromatic rubber modified graft copolymer according to the present invention includes copolymers obtained from graft copolymerization of a mixture of styrene, acrylonitrile and (meth)acrylic acid alkyl ester monomer which may be selectively included, to butadien rubber, acryl rubber or styrene/butadiene rubber. Among them, particular preference is given to ABS graft copolymers.

The method for producing the above graft copolymer includes the conventional emulsion polymerization method, suspension polymerization method, solution polymerization method or bulk polymerization method. In accordance with the preferred embodiment of the present invention, the rubber modified graft copolymer is prepared by introducing the above-mentioned aromatic vinylic monomer in the presence of a rubbery polymer and conducting emulsion polymerization or bulk polymerization using a polymerization initiator. Preferably, the rubber has a size of 0.05 to 4 µm in order to improve impact strength and surface properties of the molded articles.

The polyphenylene ether base resins which can be use in the present invention can be used alone or in a combination with styrene base polymer.

Particular examples of polyphenylene ether base resin include poly(2,6-dimethyl-1,4-phenylene)ether, poly(2,6-diethyl-1,4-phenylene)ether, poly(2,6-dipropyl-1,4-phenylene)ether, poly(2-methy-6-ethyl-1,4-phenylene)ether, poly(2-methyl-6-propyl-l,4-phenylene)ether, poly(2-ehtyl-6-propyl-1,4-phenylene)ether, poly(2,6-diphenyl-1,4-phenylene)ether, copolymers of (2,6-dimethyl-l,4-phenylene)ether and (2, 3, 6-trimethyl-1, 4-phenylene) ether, and copolymers of (2,6-dimethyl-1,4-phenylene)ether and (2,3,6-triethyl-l,4-phenylene)ether. Among these polyphenylene ether, copolymers of (2,6-dimethyl-1,4-phenylene)ether and (2,3,6-trimethyl-1,4-phenylene)ether or poly(2,6-dimethyl-1;4-phenylene)ether are preferred. In particular, poly(2,6-dimethyl-1,4-phenylene)ether is more preferred.

The degree of polymerization of the polyphenylene ether resin used to prepare the resin composition according to the present invention is not particularly limited. However, taking thermal stability or workability of the resin composition into the consideration, the polyphenylene ether resin has preferably an intrinsic viscosity of 0.2 to 0.8 as measured in chloroform solvent at 20 °C. Also, the polyphenylene ether resin can be used alone or as a mixuture of two or more in an appropriate ratio.

Further, the polyphenylene ether resin can be used in a mixture with a styrenic polymer. Such styrenic polymer includes polystyrene, high impact polystyrene (HIPS), polychlorostyrene, poly α-methylstyrene, poly tert-butylstyrene or a copolymer thereof. The above-mentioned polymers can be used alone or as a mixture of two or more in an appropriate ratio. It is most preferred to use polystyrene or high impact polystyrene. Preferably, the weight average molecular weight of the styrenic resin is 20,000 to 500,000, taking thermal stability and workability of the resin composition into consideration, although it is not particularly limited.

The polyamide base resin which can be used in the present invention includes polycaprolactam (nylon 6), poly(11-aminoundecanoic acid) (nylon 11), polylauryllactam (nylon 12), polyhexamethylene adiphamide (nylon 6,6), polyhexaethylene azelamide (nylon 6,9), polyhexamethylene cevacamide (nylon 6, 10), polyhexamethylene dodecanodiamide (nylon 6,12), or copolymers thereof, for example, nylon 6/6, 10, nylon 6/6,6, nylon 6/12. These resins also can be used alone or as a mixture of two or more in an appropriate ratio. However, it is desirable to select a polyamide resin having a melting point of not less than 200 °C and a relative viscosity of not less than 2.0 as measured at 25 °C when adding 1 % by weight of polyamide resin to m-cresol, taking mechanical properties and heat resistance of the resin composition into consideration.

The polyester base resin which can be used in the present invention includes polyalkene dicarboxylates. In general, they can be prepared by reacting one or more of diol such as ethylene glycol, 1,2-propylene glycol, 1,4-butandiol, 1,3-butylene glycol, 1,4-cyclohexanedimethanol, bisphenol-A with one or more of aromatic dicarbonic acid such as isphthalic acid, terephthalic acid, alkyl esters thereof.

Also, in accordance with the present invention, the polyester base resin includes polyethylene terephthalate resins or copolymers thereof and polybutylene terephthalate resins. As the polyethylene terephthalate base copolymers, copolymerized resins comprising mainly polyethylene terephthalate and 20 to 30% of isophthalic acid, 1,2-propylene glycol and 1,3-butylene glycol, as well as polyester resulted from the terephthalic acid and ethylene glycol can be included.

Since hydrolysis often occurs during the extruding process or moding process of the resin, it is preferred to remove water from the polyester base resin before using it. Preferably, the weight average molecular weight of the polyester base resin is 20,000 to 70,000, taking mechanical properties and heat resistance of the resin composition into consideration, although it is not particularly limited.

As the thermoplastic resin used to produce the resin composition according to the present invention, polycarbonates, polyphenylene ethers, polyesters, styrenic polymers, styrene-acrylonitrile copolymers, acrylonitrile-butadien-styrene copolymers are preferred. They can be used alone or as a mixture. A mixture such as polyphenylene ether/styrenic polymer (including HIPS), polyphenylene ether/acrylonitrile-butadien-styrene copolymer (including styrene-acrylonitrile copolymer), polycarbonate/acrylonitrile-butadien-styrene copolymer (including styrene-acrylonitrile copolymer) or polycarbonate/polyester is preferred.

### (B) Oligomeric phosphoric acid ester morpholide compound

The flame retardant thermoplastic resin composition according to the present invention comprises an oligomeric phosphoric acid ester morpholide compound represented by the general formula I in order to exhibit flame retardancy.

Preferably, the oligomeric phosphoric acid ester morpholide compound is added in an amount of 1 to 35 parts by weight based on 100 parts by weight of the thermoplastic resin. When below 1 % by weight, no flame retardancy is expressed. When more than 35 % by weight, the flame retardancy is not be improved more by the exceeding amount.

In accordance with the present invention, the flame retardant thermoplastic resin composition may further comprise commercially available flame retardant agent and flame retardation assistant other than the above-described oligomeric phosphoric acid ester morpholide compound, for example, a monomeric phosphoric acid ester morpholide compound, other organic phosphoric acid ester compound, a halogen-containing organic compound, a cyanurate compound, a metal salt, a fluorinated polyolefin and the like in order to improve flame retardancy.

The organic phosphoric acid ester compound which can be used includes monomeric phosphoric acid ester compounds such as triphenyl phosphate or tricresylphosphate and oligomeric condensed phosphoric acid ester derived from divalent alcohol such as resorcinol, hydroquinone, bisphenol-A.

The metal salt which can be used as the flame retardation assistant includes the conventionally well-known sulphonic acid metal salts. The fluorinated polyolefinic resin which can be used as the anti-drip agent includes polytetrafluoroethylenes, polyvinylidene fluorides, tetrafluoroethylene/vinyledenfluoride compolymers, tetrafluoroethylene/hexafluoropropylene copolymers and ethylene/tetrafluoroethylene copolymers. These resins can be used alone or in a combination of two or more.

In addition, the flame retardant thermoplastic resin composition according to the present invention may includes ordinary additives such as lubricant, releasing agent, nucleating agent, antistatic agent, stabilizer, a reinforcing material, inorganic additives, pigment or dye. The inorganic additives can be used in an amount of 0.1 to 60 parts by weight and preferably 1 to 40. parts by weight based on 100 parts by weight of the base thermoplastic resin.

The flame retardant thermoplastic resin composition of the present invention can be prepared by the conventional resin composition producing methods. For example, components of the present invention and other additives are mixed together, and melt-extruded in an extruder to produce the composition in a pellet form.

The flame retardant thermoplastic resin composition of the present invention can be used in molding of various articles. Particularly, it is suitable for housings and internal parts of electric and electronic appliances that need superiority in flame retardancy, heat resistance, mechanical properties, and moldability.

Now, the present invention will be described in detail, with reference to examples. However, they are given for the purpose of explanation but not for limitation of the present invention.

### Preparation Examples

### A. Phosphoric acid ester morpholide compound and phosphoric acid ester compound

### (A-1) Phosphoric acid ester morpholide compound I

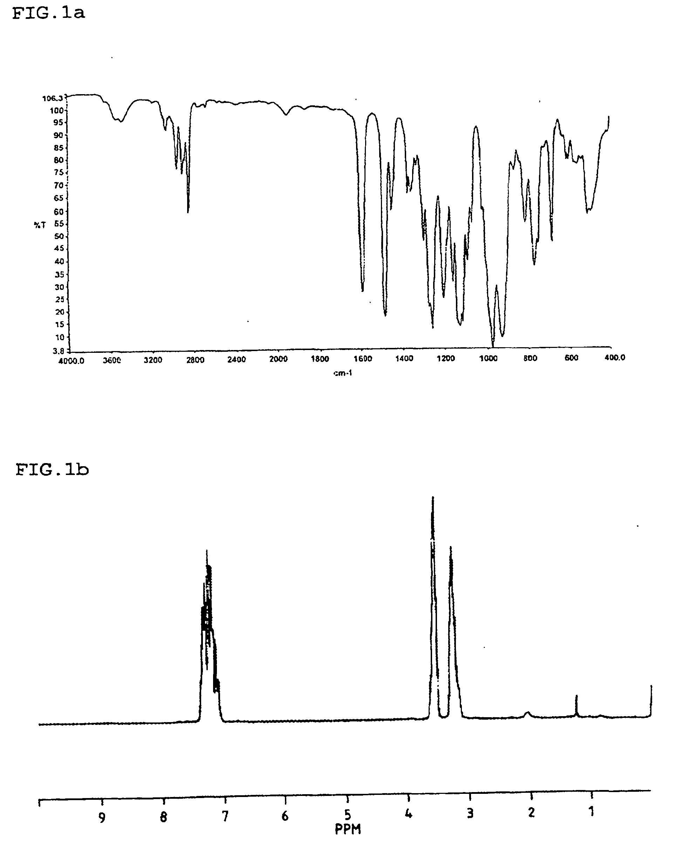

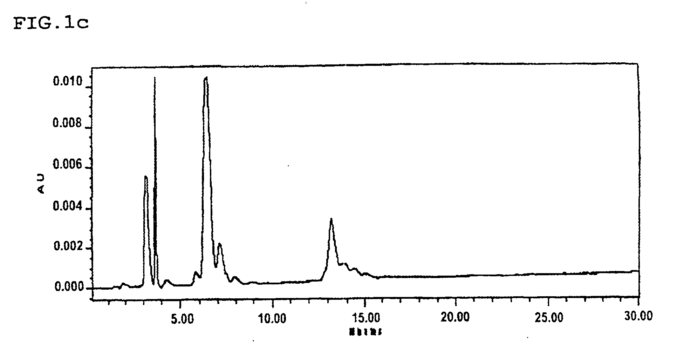

307 g (2 moles) of phosphorus oxychloride, 188 g (2 moles) of phenol, 174 g (2 moles) of morpholine, 4 g of aluminum chloride, and 900 g of triethylamine were charged into a four-neck flask equipped with a thermometer, condenser, stirrer, dropping instrument. After heating to a temperature of 140 °C, the mixture was reacted for 2 hours under an atmosphere of N₂. 110 g (1 mole) of resorcinol was further added, heated to a temperature 160 °C and reacted for 4 hours under an atmosphere of N₂. The reaction was then washed with deionized water. Catalyst and other impurities were removed to obtain 510 g of phosphoric acid ester morpholide compound I. The resulting phosphoric acid ester morpholide compound I had characteristics as listed below. The results of IR, NMR and LC (Liquid Chromatography) analysis are shown in Fig. 1a, 1b and 1c, respectively.

### <characteristics of phosphoric acid ester morpholide compound I>

Appearance: Viscous light red liquid phase
Phosphorus content: 11.2 %
Acid value (KOHmg/g): 0.32
LC data:
   Compound where n+m is 0; 1.5 %,
   Compound where n+m is 1; 68.4 %,
   Compound where n+m is 2 or more; 30.1 %.

   (n and m are as defined in the general formula I)
IR data: 2857, 2895, 2917, 2965 cm⁻¹ (-CH₂-)
NMR data: 3.2 to 3.6 ppm (-CH₂-)

### (A-2) Phosphoric acid ester morpholide compound II

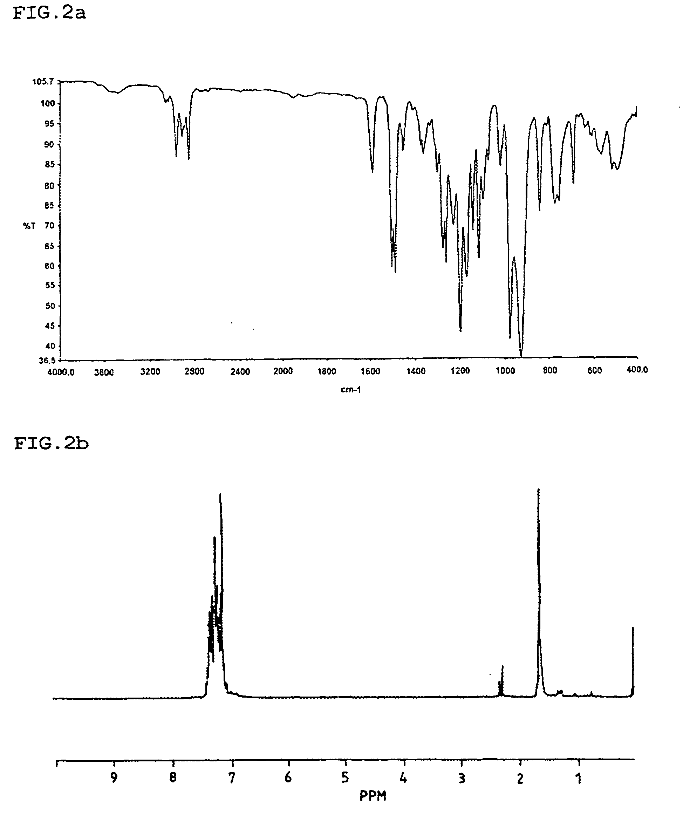

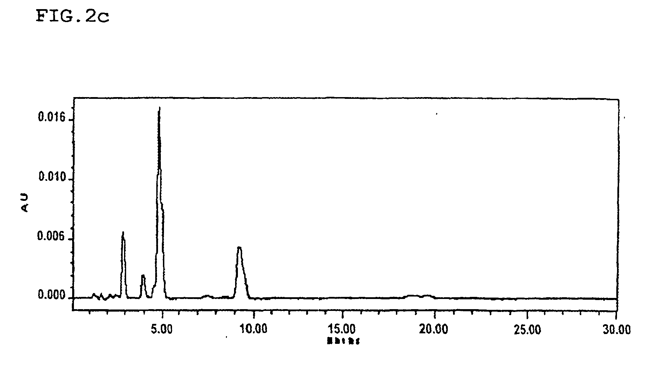

307 g (2 moles) of phosphorus oxychloride, 87 g (1 mole) of morpholine, 4 g of aluminum chloride, and 150 g of triethylamine were charged into a four-neck flask equipped with a thermometer, condenser, stirrer, dropping instrument. After heating to a temperature of 130 °C, the mixture was reacted for 2 hours under an atmosphere of N₂. 180 g (2 moles) of phenol and 108 g (1 mole) of cresol was further added, heated to a temperature 150 °C and reacted for 2 hours under an atmosphere of N₂. 228 g (1 mole) of bisphenol-A was added, heated to a temperature 180 °C and reacted for 4 hours under an atmosphere of N₂. The reaction was then washed with deionized water. Catalyst and other impurities were removed to obtain 611 g of phosphoric acid ester morpholide compound II. The resulting phosphoric acid ester morpholide compound II had characteristics as listed below. The results of IR, NMR and LC (Liquid Chromatography) analysis are shown in Fig. 2a, 2b and 2c, respectively.

### <characteristics of phosphoric acid ester morpholide compound II>

Appearance: Highly viscous light brown liquid phase
Phosphorus content: 9.0 %
Acid value (KOHmg/g): 0.3
LC data:
   Compound where n+m is 0; 3.1 %,
   Compound where n+m is 1; 84.7 %,
   Compound where n+m is 2 or more; 12.2 %.

   (n and m are as defined in the general formula I)
IR data: 2856, 2916, 2967 cm⁻¹ (-CH₂-)
NMR: 1.6 ppm (-CH₃), 3.2 to 3.6 ppm (-CH₂-)

### (A-3) phosphoric acid ester compound I

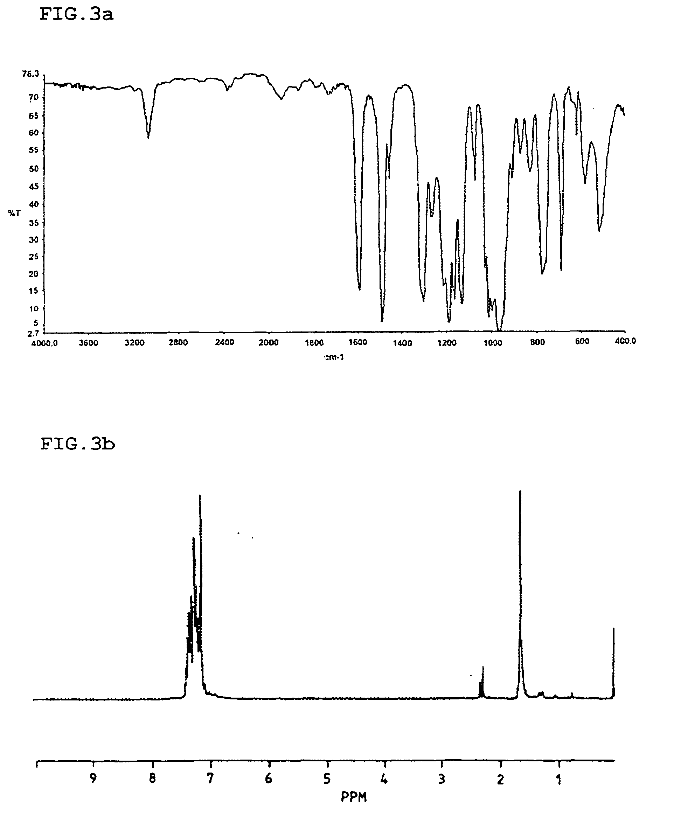

As a comparative compound herein, an oligomeric phosphoric acid ester compound I derived from a resorcinol was used. It was CR-733S supplied from Daihachi com. (Japan), which comprised 2.5 % by weight of a monomeric phosphoric acid ester compound, 67.2 % by weight of an oligomeric phosphoric acid ester compound having a number average polymerization degree of 1, and 30.3 % by weight of an oligomeric phosphoric acid ester compound having a number average polymerization degree of not less than 2. This phosphoric acid ester compound I had characteristics as listed below. The results of IR and NMR analysis are shown in Fig. 3a and 3b, respectively.

### <characteristics of phosphoric acid ester compound I>

Appearance: Transparent and viscous liquid phase
Phosphorus content: 10.9 %
Acid value (KOHmg/g): 0.1
LC data:
   Compound where m is 0; 2.5 %,
   Compound where m is 1; 67.2 %,
   Compound where m is 2 or more; 30.3 %.

   (m represents a polymerization degree)

### (A-4) phosphoric acid ester compound II

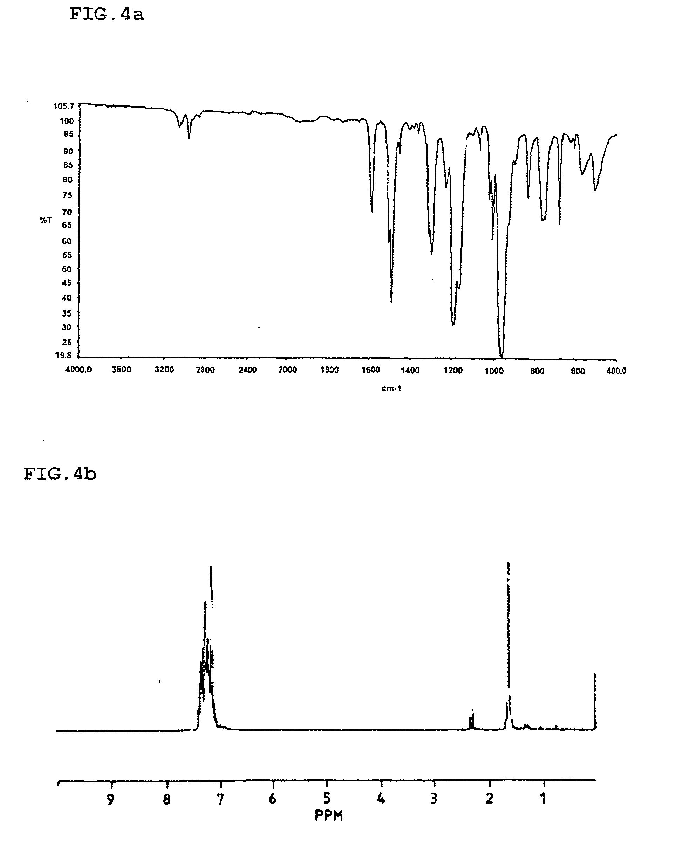

As another comparative compound herein, an oligomeric phosphoric acid ester compound II derived from a bisphenol-A was used. It was CR-741S supplied from Daihachi com. (Japan), which comprised 3.5 % by weight of a monomeric phosphoric acid ester compound, 86.7 % by weight of an oligomeric phosphoric acid ester compound having a number average polymerization degree of 1, and 9.8 % by weight of an oligomeric phosphoric acid ester compound having a number average polymerization degree of not less than 2. This phosphoric acid ester compound II had characteristics as listed below. The results of IR and NMR analysis are shown in Fig. 4a and 4b, respectively.

### <characteristics of phosphoric acid ester compound II> Appearance: Transparent and viscous liquid phase

Phosphorus content: 8.9 %
Acid value (KOHmg/g): 0.1
LC data:
   Compound where m is 0; 3.5 %,
   Compound where m is 1; 86.7 %
   Compound where m is 2 or more; 9.8 %.

   (m represents a polymerization degree)

### B. Thermoplastic resin

### (B-1) Polycarbonate resin (PC)

A polycarbonate of bisphenol-A type having a weight average molecular weight of 25,000 was used.

### (B-2) Rubber modified styrene base graft copolymer (ABS)

To a mixture of 36 parts by weight of styrene, 14 parts by weight of acrilonitrile, and 150 parts by weight of deionized water, butadiene rubber latex was added so that the content of the butadiene became 45 parts by weight based on total weight of monomers. As additives, 1.0 parts by weight of calcium oleate, 0.4 parts by weight of qumenhydroperoxide and 0.3 parts by weight of a mercaptane base chain transferring agent were further added to the mixture and reacted for 5 hours while keeping a temperature at 75 °C to obtain ABS graft latex. To the resulting polymeric latex, a 1% solution of sulfuric acid was added, solidified and dried to obtain a graft copolymer resin as powder.

### (B-3) Vinyl aromatic copolymer resin (SAN)

71 parts by weight of styrene, 29 parts by weight of acrylonitrile and 120 parts by weight of deionized water were mixed together. As additives, 0.2 parts by weight of azobisisobutylonitrile, 0.3 parts by weight of a mercaptane based chain transfering agent and 0.5 parts by weight of tricalcium phosphate were added to the mixture. By conducting suspension polymerization, the SAN copolymer was prepared. This raw SAN copolymer was washed, drained and dried to obtain the pure SAN copolymer as powder.

### (B-4) Polyphenylene ether resin (PPE)

As a polyphenylene ether resin, PPE P401 produced by Asahi Kasei Com. (Japan) was used.

### (B-5) High impact polystyrene resin (HIPS)

As a high impact polystyrene resin, HI-1190F produced by Cheil Industries Inc. (Republic of Korea) was used.

### (C) Fluorinated polyolefinic resin

As a fluorinated polyolefinic resin, Teflon 7AJ produced by Du Pont Com. (U.S.A.) was used.

### Examples

The above described components were mixed in a conventional mixer according to the compositions listed in Tables 1 to 3 below. Also, an antioxidant and thermal stabilizer were added to the mixtures. The mixtures were extruded using a twin-screw extruder with L/D=35 and Φ=45mm, and formed specimens in a form of pellet at an injection molding temperature of 220 °C to 280 °C. The resulting pellets were post-treated by leaving them for 48 hours at a temperature of 23 °C and a relative humidity of 50%. Then they were measured for their properties such as flame retardancy, melt flow rate and heat distortion temperature and the like.

### <Methods for measuring the properties>

Flame retardancy: Evaluated using a specimen having a thickness of 1.6 mm according to the criterion specified in UL 94 VB.

Average combustion time and maximum single combustion time: Evaluated according to the criterion specified in UL 94.

Melt flow rate: Evaluated according to ASTM D1238. Heat distortion temperature: evaluated at a load of 18.6 kgf according to ASTM D648.

**Table 1**

| | | Comp. | | Comp. |
|---|---|---|---|---|
| Components | Ex. 1 | Ex. 1 | Ex. 2 | Ex. 2 |
| (A-1) Phosphoric acid ester morpholide compound I | 13 | - | - | - |
| (A-2) Phosphoric acid ester morpholide compound II | - | - | 13 | - |
| (A-3) Phosphoric acid ester compound I | - | 13 | - | - |
| (A-4) Phosphoric acid ester compound II | - | - | - | 13 |
| (B-1) Polycarbonate resin | 75 | 75 | 75 | 75 |
| (B-2) Rubber modified graft copolymer | 13 | 13 | 13 | 13 |
| (B-3) Vinyl aromatic copolymer | 12 | 12 | 12 | 12 |
| (C) Fluorinated polyolefinic resin | 0.5 | 0.5 | 0.5 | 0.5 |
| UL-94 flame retardancy (1/16") | V-0 | V-0 | V-0 | V-1 |
| Average combustion time (sec) | 2.3 | 3.2 | 2.9 | 5.9 |
| Maximum single combustion time (sec) | 3 | 7 | 4 | 16 |
| Melt flow rate (g/10min)¹⁾ | 27 | 22 | 24 | 18 |
| Heat distortion Temperature (°C) | 91 | 85 | 94 | 90 |

| | | | | |
|---|---|---|---|---|
| 1) Evaluated under a condition of a temperature of 220 °C using a load of 10 kg | | | | |

Example 1 and Comparative Example 1 are to compare the events applying the oligomeric phosphoric acid ester morpholide compound derived from resorcinol and the oligomeric phosphoric acid ester compound derived from resorcinol as a flame retardant agent to a polycarbonate base resin blend. As shown in Table 1, flame retardancy was equal in both examples but heat resistance and melt flow rate were better in Example 1. Also, combustion time was shorter in Example 1.

Example 2 and Comparative Example 2 are to compare the events applying the oligomeric phosphoric acid ester morpholide compound derived from bisphenol-A and the oligomeric phosphoric acid ester compound derived from bisphenol-A as a flame retardant agent to polycarbonate resin blend. As shown in Table 1, all of the flame retardancy, heat resistance and melt flow rate were better in Example 2.

**Table 2**

| | | Comp. | | Comp. |
|---|---|---|---|---|
| Components | Ex.3 | Ex.3 | Ex.4 | Ex.4 |
| (A-1) Phosphoric acid ester morpholide compound I | 16 | - | - | - |
| (A-2) Phosphoric acid ester morpholide compound II | - | | 11 | - |
| (A-3) Phosphoric acid ester compound I | - | 16 | - | - |
| (A-4) Phosphoric acid ester compound II | - | - | - | 11 |
| (B-4) Polyphenylene ether resin | 50 | 50 | 75 | 75 |
| (B-5) High impact polystyrene base resin | 50 | 50 | 25 | 25 |
| (C) Fluorinated polyolefinic resin | 0.1 | 0.1 | 0.1 | 0.1 |
| UL-94 flame retardancy (1/16") | V-0 | V-1 | V-0 | V-1 |
| Average combustion time (sec) | 2.8 | 5.5 | 2.5 | 5.8 |
| Maximum single combustion time (sec) | 5 | 17 | 4 | 20 |
| Melt flow rate (g/10min)¹⁾ | 17 | 13 | 7 | 5 |
| HDT(°C) | 86 | 82 | 126 | 121 |

| | | | | |
|---|---|---|---|---|
| 1) evaluating under a condition of a temperature of 250 °C using a load of 10 kg | | | | |

Example 3 and Comparative Example 3 are to compare the events applying the oligomeric phosphoric acid ester morpholide compound derived from resorcinol and the oligomeric phosphoric acid ester compound derived from resorcinol as a flame retardant agent to polyphenylene ether base resin blend. As shown in Table 2, by using the oligomeric phosphoric acid ester morpholide compound according to the present invention (compound (A-1)), good flame retardancy can be achieved with superiority in heat resistance and melt flow rate.

Example 4 and Comparative Example 4 are to compare the events applying the oligomeric phosphoric acid ester morpholide compound derived from bisphenol-A and the oligomeric phosphoric acid ester compound derived from bisphenol-A as a flame retardant agent to polyphenylene ether base resin blend. In these examples it was again proved that flame retardancy, heat resistance and melt flow rate were improved when using the oligomeric phosphoric acid ester morpholide compound in accordance with the present invention (compound (A-2)).

**Table 3**

| Components | Ex. 5 | Comp. Ex. 5 |
|---|---|---|
| (A-1) Phosphoric acid ester morpholide compound I | 17 | - |
| (A-3) Phosphoric acid ester compound I | - | 17 |
| (B-2) Rubber modified graft copolymer | 35 | 35 |
| (B-3) Vinyl aromatic copolymer | 35 | 35 |
| (B-4) Polyphenylene ether resin | 30 | 30 |
| (C) Fluorinated polyolefinic resin | 0.2 | 0.2 |
| UL-94 flame retardancy (1/16") | V-1 | X(HB) |
| Average combustion time (sec) | 18 | 28 |
| Maximum sing combustion time (sec) | 25 | 48 |
| Melt flow rate (g/10min)¹⁾ | 68 | 59 |
| HDT (°C) | 78 | 74 |

| | | |
|---|---|---|
| 1) evaluating under a condition of a temperature of 220 °C using a load of 10 kg | | |

Example 5 and Comparative Example 5 are to compare the events applying the oligomeric phosphoric acid ester morpholide compound derived from resorcinol and the oligomeric phosphoric acid ester compound derived from resorcinol as a flame retardant agent to rubber modified graft copolymer/vinyl aromatic copolymer/polyphenylene ether resin blend. In these, it is again proved that flame retardancy, heat resistance and melt flow rate were better in Example 5.

As described above, in accordance with the present invention, by using an oligomeric phosphoric acid ester morpholide compound as a flame retardant agent added to the thermoplastic resin, it is possible to achieve improvement in flame retardancy even when using a small amount. Also, it is possible to provide a flame retardant thermoplastic resin composition with improvement in balance of properties such as flame retardancy, thermal stability, workability, impact strength, heat resistance, appearance and the like.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. An oligomeric phosphoric acid ester morpholide compound represented by the following general formula I: 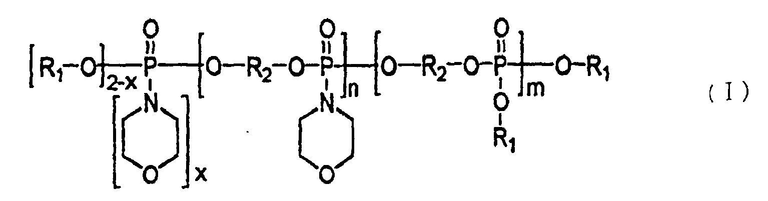
in which X is 1 or 2; R1 is a C6-C20 aryl group, an alkyl substituted C6-C20 aryl group or a derivative thereof; R2 is a C6-C30 aryl group, an alkyl substituted C6-C30 aryl group or a derivative thereof; and n+m is 1 to 5.

2. The oligomeric phosphoric acid ester morpholide compound according to claim 1, wherein the R1 is a phenyl group or a phenyl group substituted with methyl, ethyl, propyl, isopropyl, butyl, sec-butyl, tert-butyl, isobutyl, isoamyl, or tert-amyl group.

3. The oligomeric phosphoric acid ester morpholide compound according to claim 1, wherein the R2 is resorcinol, hydroquinone, bisphenol-A or derivatives thereof.

4. A flame retardant thermoplastic resin composition comprising 100 parts by weight of a thermoplastic resin and 1 to 35 parts by weight of an oligomeric phosphoric acid ester morpholide compound represented by the following general formula I: 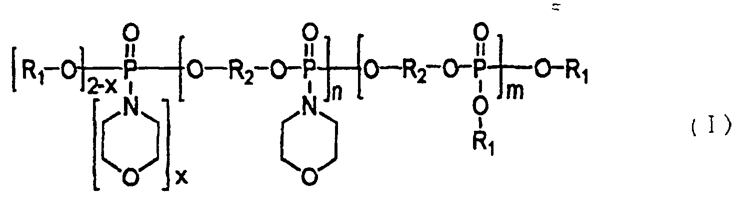
in which X is 1 or 2; R1 is a C6-C20 aryl group, an alkyl substituted C6-C20 aryl group or a derivative thereof; R2 is a C6-C30 aryl group, an alkyl substituted C6-C30 aryl group or a derivative thereof; and n+m is 1 to 5.

5. The flame retardant thermoplastic resin composition according to claim 4, wherein the thermoplastic resin comprises olefinic resins, acrylic resins, styrenic resins, vinyl aromatic copolymers, polyester base resins, polyamide base resins, polycarbonate resin, polyphenylene ether base resins or mixtures thereof.

6. The flame retardant thermoplastic resin composition according to claim 4, wherein the thermoplastic resin comprises polycarbonate resins, styrenic polymers, (rubber-modified) styrene-acrylonitrile copolymers or mixtures thereof.

7. The flame retardant thermoplastic resin composition according to claim 4, wherein the thermoplastic resin comprises a mixture of a polyphenylene ether base resin and high impact polystyrene resin.

8. The flame retardant thermoplastic resin composition according to claim 7, wherein the polyphenylene ether resin is poly(2,6-dimethyl-1,4-phenylene ether).

9. The flame retardant thermoplastic resin composition according to claim 4, wherein the thermoplastic resin comprises a mixture of a polycarbonate resin and a rubber modified styrene-acrylonitrile copolymer.

10. The flame retardant thermoplastic resin composition according to claim 9, wherein the polycarbonate base resin is a bisphenol-A polycarbonate.

11. The flame retardant thermoplastic resin composition according to claim 9, wherein the rubber modified styrene-acrylonitrile copolymer comprises a mixture of a styrene-acrylonitrile-butadiene resin (ABS) and a styrene-acrylonitrile copolymer (SAN).

## Patentansprüche

1. Oligomere Phosphorsäureester-Morpholidverbindung, wiedergegeben durch die nachstehende allgemeine Formel I: 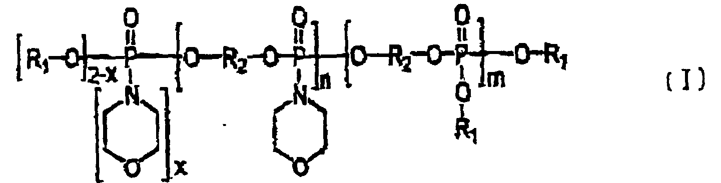 worin X 1 oder 2 ist; R₁ eine C₆-C₂₀-Arylgruppe, eine Alkyl-substituierte C₆-C₂₀-Arylgruppe oder ein Derivat davon darstellt; R₂ eine C₆-C₃₀-Arylgruppe, eine Alkyl-substituierte C₆-C₃₀-Arylgruppe oder ein Derivat davon darstellt; und n+m 1 bis 5 ist.

2. Oligomere Phosphorsäureester-Morpholidverbindung nach Anspruch 1, worin das R₁ eine Phenylgruppe, oder eine Phenylgruppe, substituiert mit Methyl-, Ethyl-, Propyl-, Isopropyl-, Butyl-, sec-Butyl-, tert-Butyl-, Isobutyl-, Isoamyl- oder tert-Amylgruppe, darstellt.

3. Oligomere Phosphorsäureester-Morpholidverbindung nach Anspruch 1, worin das R₂ Resorcin, Hydrochinon, Bisphenol-A oder Derivate davon darstellt.

4. Flammverzögernde thermoplastische Harzzusammensetzung, umfassend 100 Gewichtsteile eines thermoplastischen Harzes und 1 bis 35 Gewichtsteile einer oligomeren Phosphorsäureester-Morpholidverbindung, wiedergegeben durch die nachstehende allgemeine Formel I: 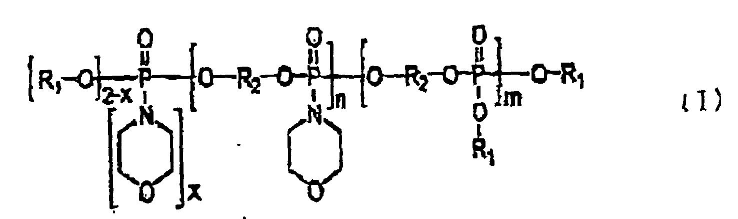 worin X 1 oder 2 ist; R₁ eine C₆-C₂₀-Arylgruppe, eine Alkyl-substituierte C₆-C₂₀-Arylgrupge oder ein Derivat davon darstellt; R₂ eine C₆-C₃₀-Arylgruppe, eine Alkyl-substituierte C₆-C₃₀-Arylgruppe oder ein Derivat davon darstellt; und n+m 1 bis 5 ist.

5. Flammverzögernde thermoplastische Harzzusammensetzung nach Anspruch 4, worin das thermoplastische Harz olefinische Harze, Acrylharze, Styrolharze, Vinyl-aromatische Copolymere, Polyestergrundharze, Polyamidgrundharze, Polycarbonatharz, Polyphenylenethergrundharze oder Gemische davon umfasst.

6. Flammverzögernde thermoplastische Harzzusammensetzung nach Anspruch 4, worin das thermoplastische Harz Polycarbonatharze, Styrolpolymere, (Kautschuk-modifizierte) Styrol-Acrylnitril-Copolymere oder Gemische davon umfasst.

7. Flammverzögernde thermoplastische Harzzusammensetzung nach Anspruch 4, worin das thermoplastische Harz ein Gemisch von einem Polyphenylenethergrundharz und hoch schlagfestem Polystyrolharz umfasst.

8. Flammverzögernde thermoplastische Harzzusammensetzung nach Anspruch 7, worin das Polyphenylenetherharz Poly(2,6-dimethyl-1,4-phenylenether) darstellt.

9. Flammverzögernde thermoplastische Harzzusammensetzung nach Anspruch 4, worin das thermoplastische Harz ein Gemisch von einem Polycarbonatharz und einem Kautschuk-modifizierten Styrol-Acrylnitril-Copolymer umfasst.

10. Flammverzögernde thermoplastische Harzzusammensetzung nach Anspruch 9, worin das Polycarbonatgrundharz ein Bisphenol-A-Polycarbonat darstellt.

11. Flammverzögernde thermoplastische Harzzusammensetzung nach Anspruch 9, worin das Kautschuk-modifizierte Styrol-Acrylnitril-Copolymer ein Gemisch von einem Styrol-Acrylnitril-Butadien-Harz (ABS) und einem Styrol-Acrylnitril-Copolymer (SAN) umfasst.

## Revendications

1. Composé oligomère morpholide d'ester d'acide phosphbrigue représenté par la formule générale suivante I: 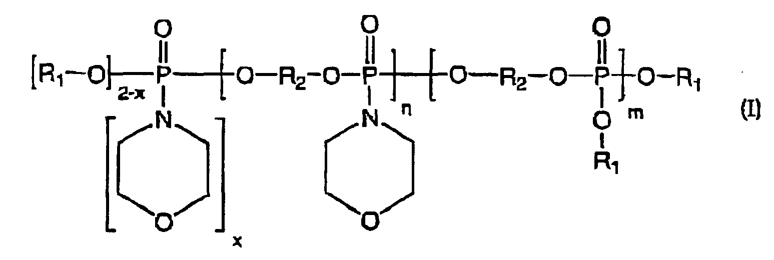
dans laquelle x est 1 ou 2 ; R₁ est un groupe aryle en C₆-C₂₀, un groupe aryle en C₆-C₂₀ à substitution alkyle ou un dérivé de celui-cl ; R₂ est un groupe aryle en C₆-C₃₀, un groupe aryle en C₈-C₃₀ à substitution alkyle ou un dérivé de celui-ci ; et n + m est 1 à 5.

2. Composé oligomère morpholide d'ester d'acide phosphorique selon la revendication 1, dans laquelle R₁ est un groupe phényle ou un groupe phényle substitué par un groupe méthyle, éthyle, propyle, isopropyle, butyle, sec-butyle, tert-burtyle, isobutyle, isoamyle, ou tert-amyle.

3. Composé oligomère morpholide d'ester d'acide phosphorique selon la revendication 1, dans laquelle R₂ est un groupe résorcinol, hydroquinone, bisphénol-A ou des dérivés de celui-ci.

4. Composition de résine thermoplastique ignifugeante comprenant 100 parties en poids d'una résine thermoplastique et 1 à 35 parties en poids d'un composé oligomère morpholide d'ester d'acids phosphorique représenté par la formule générale suivante (I) : 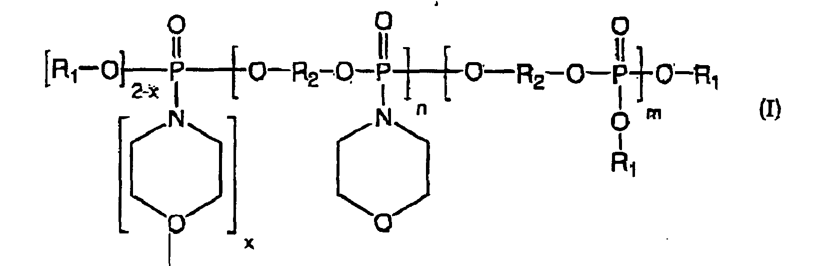
dans laquelle x est 1 ou 2 ; R₁ est un groupe aryle en C₆-C₂₀, un groupe aryle en C₈-C₂₀ à substitution alkyle ou un dérivé de celui-ci ; R₂ est un groupe aryle en C₆-C₃₀, un groupe aryle en C₆-C₃₀ à substitution alkyle ou un dérivé de celui-ci ; et n + m est 1 à 5.

5. Composition de résine thermoplastique ignifugeante selon la revendication 4, dans laquelle la résine thermoplastique comprend des résines oléfiniques, des résines acryliques, des résines styréniques, des copolymères aromatiques vinyliques, des résines à base de polyester, des résines à base de polyamide, des résines polycarbonates, des résines à base de polyéther de phénylène ou leurs mélanges.

6. Composition de résine thermoplastique ignifugeante selon la revendication 4, dans laquelle la résine thermoplastique comprend des résines polycarbonates, des polymères styréniques, des copolymères styrène-acrylonitrile (modifié par du caoutchouc) ou leurs mélanges.

7. Composition de résine thermoplastique ignifugeante selon la revendication 4, dans laquelle la résine thermoplastique comprend un mélange d'une résine à base de polyéther de phénylène et de résine de polystyrène à résistance au choc élevée.

8. Composition de résine thermoplastique ignifugeante selon la revendication 7, dans laquelle la résine de polyéther de phénylène est le poly(éther de 2,6-diméthyl-1,4-phénylène).

9. Composition de résine thermoplastique ignifugeante selon la revendication 4, dans laquelle la résine thermoplastique comprend un mélange d'une résine de polycarbonate et d'un copolymère styrène-acrylonitrile modifié par du caoutchouc.

10. Composition de résine thermoplastique ignifugeante selon la revendication 9, dans laquelle la résine à base de polycarbonate est un polycarbonate de bisphénol-A.

11. Composition de résine thermoplastique ignifugeante selon la revendication 9, dans laquelle le copolymère styrène-acrylonitrile modifié par du caoutchouc comprend un mélange d'une résine styrène-acrylonitrile-butadiène (ABS) et d'un copolymère styrène-acrylonitrile (SAN).
